(19) Europäisches Patentamt
European Patent Office
Office européen des brevets

(11) EP 2 388 289 A1

(12) **EUROPÄISCHE PATENTANMELDUNG**

(43) Veröffentlichungstag:
**23.11.2011 Patentblatt 2011/47**

(51) Int Cl.:
***C08J 9/00*** *(2006.01)* ***C08J 9/28*** *(2006.01)*

(21) Anmeldenummer: **10163180.2**

(22) Anmeldetag: **18.05.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **STO AG**
**79780 Stühlingen (DE)**

(72) Erfinder:
- **Weier, Andreas**
  **84508 Burgkirchen an der Alz (DE)**
- **Hitzler, Martin**
  **83342 Tacherting (DE)**

(74) Vertreter: **Gottschalk, Matthias**
**c/o Maiwald Patentanwaltsgesellschaft (Schweiz) mbH**
**Splügenstrasse 8**
**8002 Zürich (CH)**

(54) **Nanoporöse polymere Kunststoffe mit Füllstoff als Kombinationsdämmstoffe für Bauelemente**

(57) Durch Umsetzung von ein oder mehreren Epoxidharzen mit einem amphiphilen Epoxidharzhärter in Wasser im Sinne einer Phaseninversionspolymerisation und Zugabe von funktionalen nano strukturierten anorganischen Materialien sind nanoporöse polymere Kunststoffe erhältlich. Diese eignen sich als Kombinationsdämmstoffe für Bauelemente.

EP 2 388 289 A1

## Beschreibung

### Gebiet der Erfindung

Die Erfindung betrifft einen Kombinationsdämmstoff aus mindestens einem organischen nanoporösen polymeren Kunststoff und mindestens einem funktionalen nanostrukturierten anorganischen Material, aus diesem Kombinationsdämmstoff gefertigte Bauelemente sowie deren Verwendung zur Wärmedämmung von Gebäuden und Gebäudeteilen.

### Hintergrund der Erfindung

Bauelemente, insbesondere plattenförmige Bauelemente zur bauseitigen Anbringung und/oder weiteren Verarbeitung, wie beispielsweise Putzträgerplatten, Wärmedämmplatten und dergleichen, sind auf dem Markt in großer Anzahl und aus verschiedenen Werkstoffen bestehend verfügbar. Der Werkstoff für ein solches Bauelement wird in der Regel in Abhängigkeit vom jeweiligen Verwendungszweck des Bauelementes gewählt. So besteht beispielsweise ein Bauelement, das eine tragende Funktion besitzt, in der Regel aus einem Werkstoff bzw. Material, das eine hohe Festigkeit aufweist. Ein als Wärmedämmplatte einsetzbares Bauelement dagegen besteht vorzugsweise aus einem Material, das eine geringe Wärmeleitfähigkeit besitzt. Bauelemente dienen der Ausbildung von Bauteilen, wie beispielsweise einer Außen- oder Innenwand, einer Decke oder dergleichen. Da Bauteile in der Regel gleich mehrere Funktionen zu erfüllen haben, weisen sie oftmals einen geschichteten Aufbau bestehend aus unterschiedlichen Bauelementen aus unterschiedlichen Werkstoffen auf, die u.a. auch Funktionen wie Dampfdiffusionsverhalten oder akustische Eigenschaften beeinflussen. Somit besteht auch an jedes Bauelement eines solchen Bauteils die Anforderung, die erforderlichen Funktionen wie mechanische Stabilität oder Wärmedämmeigenschaften bereits zu unterstützen. Derartige Anforderungen werden beispielsweise an Wärmedämmplatten gestellt, die in der Regel aus einem Material bestehen, das eine Hohlräume aufweisende Mikrostruktur besitzt, wobei die Hohlräume gasgefüllt sind. Die Eigenschaften einer Wärmedämmplatte hängen im Wesentlichen von der Art, des Aufbaus und der hohlraumbildenden Porenstruktur der Wärmedämm-Materialien ab. Als Beispiele seien hier Hartschaumstoffplatten aus Polystyrol, Polyurethan, Phenolharz oder mineralische Platten aus Perlite oder Kalziumsilikatschaum genannt.

### Stand der Technik

Gerade im Bereich Bau sind zelluläre Strukturen weit verbreitet, deren Anwendung als Dämmmaterial zu einem beträchtlichen Anteil auf der physikalischen Trennung verschiedener gasenthaltender Hohlräume voneinander beruht. Sinn dieser Strukturen ist es, die Wärmeströmung durch die Bewegung von Gasmolekülen innerhalb der Dämmplatte möglichst einzuschränken. Ein alternativer Weg zu Strukturen mit geringen Wärmeströmungen ist die Nutzung von kontinuierlichen Strukturen mit extrem kleinen Hohlraumdurchmessern, so dass die mittlere freie Weglänge der enthaltenen Gasmoleküle durch die Wandung der ausgefüllten Hohlräume limitiert ist. Derartige Strukturen sind z.B. in Aerogelen realisiert, die seit vielen Jahren bekannt sind, deren kommerzielle Verwendung allerdings durch mangelnde Scherfestigkeit sowie aus ökonomischen Gründen extrem limitiert geblieben ist.

Polymere Epoxidharze sind seit langem bekannt. Sie werden in aller Regel durch Umsetzung von Polyepoxiden mit im Mittel mindestens zwei terminalen oder lateralen Epoxidgruppen pro Molekül mit Härtern, insbesondere aminischen Härtern, bei denen es sich um Di- oder Polyamine handelt, hergestellt. Diese polymeren Epoxidharze haben vielfältige Anwendungsgebiete, wobei die Verwendung als Lacke und Beschichtungsmassen (Aufbringung einer Deckschicht auf ein Substrat), dominieren.

EP-A-1,518,875 beschreibt spezielle Härter für wasserbasierte Epoxidharzsysteme, wobei diese Härter erhältlich sind, indem man eine Mischung von (a) mindestens einem epoxidierten Polyalkylenoxid, ausgewählt aus der Gruppe der epoxidierten Polyethylenoxide, der epoxidierten Polypropylenoxide und der Polyethylenpropylenoxide, (b) mindestens einer epoxidierten aromatischen Hydroxyverbindung ausgewählt aus der Gruppe der Bisphenol-A-Epoxide und der Bisphenol-F-Epoxide und (c) mindestens einer aromatischen Hydroxyverbindung, ausgewählt aus der Gruppe Bisphenol-A und Bisphenol-F zu einem Zwischenprodukt umsetzt und dieses Zwischenprodukt anschließend mit einem Polyamin umsetzt. Offenbart ist auch die Verwendung dieser Härter zur Herstellung von Klarlacken und Beschichtungsmassen (Aufbringung einer Deckschicht auf ein Substrat, zum Beispiel für Fußbodenbeschichtungen).

Vergleichbare Epoxidharzstrukturen sind auch in nanoporöser Form herstellbar. Dabei zeigt sich aber, dass trotz ihrer sehr feinteiligen Nanostruktur derartige Werkstoffe z.B. in Plattenform keine gute Kombination aus Wärmeisolationseigenschaft und mechanischer Festigkeit aufweisen. Ein Plattenwerkstoff mit hoher Dichte weist beispielsweise eine gute mechanische Stabilität bei jedoch gleichzeitig schlechter Wärmeisolationseigenschaft auf, während ein Produkt mit niedriger Dichte hingegen eine gute Wärmeisolationseigenschaft bei gleichzeitig schlechter mechanischer Stabilität zeigt.

Aus praktischen Gründen ist es im Bausektor weiterhin essentiell, dass der wichtige Aspekt Brandeigenschaft verwendeter organischer Materialien kritisch betrachtet und auf die Anwendungsbereiche angepasst wird. Leider sind die bezogen auf ihre Flexibilität und Standsicherheit gut geeigneten organischen Materialien oftmals nur durch kritisch zu sehende Modifikationen oder Additive wie bspw. den Zusatz von toxikologisch und ökologisch bedenklichen Flammschutzmitteln so ausrüstbar, dass sie gewisse Mindestanforderungen an die Brandeigenschaften erfüllen.

## Beschreibung der Erfindung

Es ist eine Aufgabe der vorliegenden Erfindung, einen Kombinationsdämmstoff bereitzustellen, der sich als Wärmedämm-Material eignet. Insbesondere sollten diese Materialien eine geringe Wärmeleitfähigkeit und hohe mechanische Festigkeit aufweisen.

Gegenstand der vorliegenden Erfindung ist ein Kombinationsdämmstoff aus mindestens einem organischen nanoporösen polymeren Kunststoff und mindestens einem funktionalen nanostrukturierten anorganischen Material, z.B. einem Aerogel, wobei der Kombinationsdämmstoff gleichzeitig gute mechanische und dämmende Eigenschaften aufweist, sowie aus diesem Kombinationsdämmstoff gefertigte Bauelemente und deren Verwendung in Wärmedämmverbundsystemen.

Der erfindungsgemäße Kombinationsdämmstoff umfasst mindestens einen organischen nanoporösen polymeren Kunststoff. Dieser polymere Kunststoff weist bevorzugt im Inneren Hohlräume auf. Bei dem Kunststoff mit Hohlräumen handelt es sich um schwammartige Strukturen, die sowohl Makro- als auch Mikroporen aufweisen, wobei die Mikroporen dominieren und wobei die Mikroporen mittlere Querschnitte im Bereich von 10 bis 500 nm und insbesondere von 10 bis 100 nm aufweisen.

Unter funktionalen nanostrukturierten anorganischen Materialien sind im Sinne der Erfindung bevorzugt Aerogele, Xerogele, Cryogele, Zeolithe oder gefällte oder pyorogene Kieselsäuren, bevorzugt Aerogele, zu verstehen. Die funktionalen nanostrukturierten anorganischen Materialien weisen bevorzugt eine sehr geringer Wärmeleitfähigkeit, bevorzugt unterhalb von 0,05 W/(m*K), weiter bevorzugt unterhalb von 0,04 W/(m*K), weiter bevorzugt unterhalb von 0,03 W/(m*K), weiter bevorzugt unterhalb von 0,02 W/(m*K), und/oder eine hohe Porosität auf. Gemäß einer bevorzugten Ausgestaltung der Erfindung ist das mindestens eine funktionale nanostrukturierte anorganische Material ein hochporöser Feststoff mit einer netzartigen Hohlraumstruktur.

Die funktionalen nanostrukturierten anorganischen Materialien sind dabei in doppeltem Sinne funktional als Materialien zum Senken der Wärmeleitfähigkeit und gleichzeitig als Materialien, die die Festigkeit des Kombinationsdämmstoffs erhöhen. Sie weisen eine nanostrukturierte Struktur auf, d.h., sie besitzen Poren oder Oberflächenstrukturen im Bereich von wenigen Nanometer bis hin zu Mikrometern. Schließlich bestehen die Materialien überwiegend aus anorganischem Material, d.h. zu mindestens 90 Gew.-%, bevorzugt zu mindestens 95 Gew.-%, weiter bevorzugt zu mindestens 99 Gew.-%.

In der vorliegenden Erfindung kommen bevorzugt Aerogele zum Einsatz. Dabei umfassen Aerogele hochporöse Festkörper, bei denen bis zu 99,98 % des Volumens aus Poren bestehen. Besonders bevorzugt werden Aerogele auf Silicatbasis verwendet. Andere Formen, beispielsweise auf Kunststoff- oder Kohlenstoffbasis, können jedoch auch verwendet werden. Im Prinzip kann man jedes Metalloxid, Polymer und diverse andere Stoffe als Ausgangsbasis für die Aerogelsynthese mittels eines Sol-Gel-Prozesses heranziehen und das entstehende Aerogel in der vorliegenden Erfindung verwenden. Besonders bevorzugt werden Aerogele mit einem hohen Anteil an Poren, d.h. ein hoch poröse Aerogel. Entsprechende Aerogele sind beispielsweise von der Firma Cabot oder der Firma Aspen Aerogel erhältlich.

Beispiele von Aerogelen, die gemäß der vorliegenden Erfindung als funktionale nanostrukturierte anorganische Materialien verwendet werden können, schließen auch das Aerogel Spaceloft® der Firma Aspen Aerogel mit ein. Dabei handelt es sich um ein Silica-Aerogel, das in festigenden Fasern eingebunden ist. Bevorzugt wird das Material als zerkleinertes Material eingesetzt, beispielsweise als geschredderte Fasermatte.

Xerogele können ebenfalls Anwendung als funktional nanostrukturierte anorganische Materialien im Sinne der Erfindung finden. Auch Xerogele sind poröse Feststoffe mit einer netzwerkartigen Struktur, die aus der Trocknung eines Gels hervorgehen können, beispielsweise aus einem Silicagel. Im Gegensatz zu den Aerogelen weisen Xerogele während der Trocknung erhebliche Strukturänderungen auf, die mit Schrumpfungsprozessen und üblicherweise einer Abnahme der Porosität verbunden sind. Diese kann bei Xerogelen um 50 % liegen, während Aerogelen üblicherweise mindestens etwa 90 % ihres ursprünglichen Volumens behalten.

Schließlich können auch Cryogele im Rahmen der vorliegenden Erfindung als funktional nano strukturierte anorganische Materialien eingesetzt werden.

Besonders bevorzugt besitzen die Aero-, Xero- und Cryogele eine hohe Porosität und/oder eine große Oberfläche.

Erfindungsgemäß einsetzbare Zeolithe schließen alle bekannten Zeolithe ein und umfassen bevorzugt Zeolithe mit hoher Porosität. Insbesondere bevorzugt werden Pentasile als Zeolithe verwendet, wobei ZSM-5 besonders bevorzugt ist. Auch Molekularsiebe können im Sinne dieser Erfindung eingesetzt werden.

Pyrogene Kieselsäuren sind amorphe $SiO_2$-Pulver von 5-50 nm Durchmesser und mit einer spezifischen Oberfläche von 50-600 $m^3/g$. Als pyrogene Kieselsäuren können beispielsweise die Produkte der Reihe Aerosil® der Firma Evonik® verwendet werden, insbesondere bevorzugt die hydrophile pyrogene Kieselsäure Aerosil® 200 mit einer BET-Oberfläche von etwa 200 $m^2/g$. Als gefällte, hydrophobe Kieselsäure kann beispielsweise Sipernat® D10 der Firma Evonik® genannt werden.

Die funktionalen nanostrukturierten anorganischen Materialien können im organischen nanoporösen polymeren Kunststoff geordnet, ungeordnet oder in einer Schichtstruktur eingebettet sein.

Gemäß einer bevorzugten Ausführungsform weist das funktionale nanostrukturierte anorganische Material eine Partikelgröße von 10 nm bis 5 mm, bevorzugt von 10 nm bis 100 $\mu$m, weiter bevorzugt von 20 nm bis 1 $\mu$m.

Die erfindungsgemäßen Kombinationsdämmstoffe aus mindestens einem organischen nanoporösen polymeren Kunststoff und mindestens einem funktionalen nanostrukturierten anorganischen Material zeichnen sich durch eine geringe Wärmeleitfähigkeit bei hoher mechanischer Festigkeit aus. Dies macht die Materialien in Hinblick auf die Verwendung als konstruktive, mechanisch belastbare Wärmedämm-Materialien, z.B. in Form einer Wärmedämmplatte, besonders attraktiv.

Der Kombinationsdämmstoff kann bevorzugt einen Anteil des mindestens einen organischen nanoporösen polymeren Kunststoffs von mehr als 30 Vol.-%, weiter bevorzugt von mehr als 40 Vol.-%, besonders bevorzugt von mehr als 50 Vol.-%, bezogen auf das gesamte Volumen der verwendeten Stoffe, aufweisen.

Gemäß einer anderen bevorzugten Ausführungsform kann der Kombinationsdämmstoff einen Anteil des mindestens einen funktionalen nanostrukturierten anorganischen Materials von 80 Vol-% bis 2 Vol-%, bevorzugt von 70 Vol.-% bis 3 Vol.-%, weiter bevorzugt von 60 Vol.-% bis 4 Vol.-%, bezogen auf das gesamte Volumen der verwendeten Stoffe, aufweisen.

Insbesondere zeichnet sich die Kombination aus mindestens einem organischen nanoporösen polymeren Kunststoff und mindestens einem funktionalen nanostrukturierten anorganischen Material durch eine überraschend hohe mechanische Stabilität bei gleichzeitig guten Wärmeisolationseigenschaften aus. Diese Materialien sind außerdem geeignete Matrizes zur Mitverwendung von anderen eigenschaftsmodifizierenden Füllkörpern wie Fasern, elastischen Füllstoffen oder Pigmenten.

__Zu den Epoxidharzen (E)__

Bei den Epoxidverbindungen (E) handelt es sich um Polyepoxide mit im Mittel mindestens zwei terminalen oder lateralen Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl-oder Arylsubstituenten, Ethergruppierungen und ähnliche.

Vorzugsweise handelt es sich bei diesen Epoxidverbindungen um Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren).

Die Epoxidäquivalentgewichte dieser Epoxidverbindungen liegen vorzugsweise zwischen 85 und 3200, insbesondere zwischen 170 und 830. Das Epoxidäquivalentgewicht einer Substanz ist dabei als diejenige Menge der Substanz (in Gramm) definiert, welche 1 mol Oxiranringe enthält.

Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-Dihydroxy-diphenylcyclohexan, 4,4'-Dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon, u.a., sowie die Chlorierungs- und Bromierungsprodukte der vorstehend genannten Verbindungen; Bisphenol A ist dabei ganz besonderes bevorzugt.

Auch die Polyglycidylether von mehrwertigen Alkoholen sind als Verbindungen (E) geeignet. Als Beispiele derartiger mehrwertiger Alkohole seien Ethylenglykol, Diethylenglykol, Triethylenglykol, 1,2-Propylenglykol, Polyoxypropylenglykole ($n = 1 - 20$), 1,3-Propylenglykol, 1,4-Butylenglykol, 1,5-Pentandiol, 1,6-Hexandiol, 1,2,6-Hexantriol, Glycerin, Isosorbid und Bis-(4-hydroxycyclohexyl)-2,2-propan genannt.

Es können auch Polyglycidylether von Polycarbonsäuren als Verbindungen (F) verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Es können auch Mischungen von mehreren Epoxidverbindungen (E) verwendet werden.

Bei der Herstellung von organischen nanoporösen polymeren Kunststoffen, bei der die Härter (H) in wässrigem

Milieu mit Epoxidverbindungen (E) im Sinne einer Phaseninversionspolymerisation (PIP) umsetzt werden, können optional zusätzliche dem Fachmann einschlägig bekannte Zusatzstoffe und/oder Verarbeitungshilfsmittel eingesetzt werden. Beispiele hierfür sind Pigmente, Zement, Kies, Entlüfter, Entschäumer, Dispergierhilfsmittel, Antiabsetzmittel, Beschleuniger, freie Amine, Verlaufsadditive, Leitfähigkeitsverbesserer.

**Zu den Epoxidharzhärtern (H)**

Unter amphiphilen Epoxidharzhärtern (H) sind solche Epoxidharzhärter zu verstehen, die hydrophile und hydrophobe Strukturelemente aufweisen.

Vorzugsweise setzt man solche amphiphilen Epoxidharzhärter ein, die in Wasser bei 25 °C selbstemulgierend sind und die außerdem in der Lage sind, Epoxidharze (E) in Wasser bei 25 °C zu emulgieren.

Vorzugsweise setzt man solche Härter (H) ein, die erhältlich sind, indem man eine Mischung enthaltend

(A) mindestens einem epoxidierten Polyalkylenoxid, ausgewählt aus der Gruppe der epoxidierten Polyethylenoxide, der epoxidierten Polypropylenoxide und der Polyethylenpropylenoxide,

(B) mindestens einer epoxidierten aromatischen Hydroxyverbindung ausgewählt aus der Gruppe der Bisphenol-A-Epoxide und der Bisphenol-F-Epoxide und

(C) mindestens einer aromatischen Hydroxyverbindung, ausgewählt aus der Gruppe Bisphenol-A und Bisphenol-F

zu einem Zwischenprodukt umsetzt und dieses Zwischenprodukt anschließend mit einem Polyamin (P) umsetzt.

In einer Ausführungsform werden ausschließlich die Komponenten (A), (B) und (C) zu dem Zwischenprodukt umgesetzt und dieses weiter mit einem Polyamin (P) umgesetzt.

In einer weiteren Ausführungsform werden zur Herstellung des Zwischenproduktes, das anschließend mit den Polyaminen (P) zum Härter umgesetzt wird, neben den Verbindungen (A), (B) und (C) zusätzlich die Verbindungen (D) eingesetzt. Bei den Verbindungen (D) handelt es sich um Verbindungen aus der Gruppe der Triglycidylether von Triolen und der Diglycidylether von Diolen. Als Beispiele geeigneter Diole und Triole, die den Verbindungen (D) zu Grunde liegen, seien genannt: Ethylenglykol, Diethylenglykol, Triethylenglykol, 1,2-Propylenglykol, 1,3-Propylenglykol, 1,4-Butylenglykol, 1,5-Pentandiol, 1,6-Hexandiol, Cyclohexandiol, Cyclohexandimethanol, Neopentylglykol, 1,2,6-Hexantriol, Glycerin und Trimethylolpropan.

Zu den Verbindungen (A)

Unter **epoxidierten Polyethylenoxiden** werden im Rahmen der Erfindung Verbindungen verstanden, die erhältlich sind, indem man die beiden terminalen OH-Gruppen von Polyethylenoxid in Oxirangruppen überführt, beispielsweise durch Umsetzung mit Epichlorhydrin. Das eingesetzte Polyethylenoxid kann dabei ein mittleres Molgewicht im Bereich von 80 bis 3000 aufweisen; es kann hergestellt werden, indem die Polymerisation des Ethylenoxids auf einem Alkylendiol mit C2-C18 in der dem Fachmann bekannten Weise gestartet wird.

Unter **epoxidierten Polypropylenoxiden** werden im Rahmen der Erfindung Verbindungen verstanden, die erhältlich sind, indem man die beiden terminalen OH-Gruppen von Polypropylenoxid in Oxirangruppen überführt, beispielsweise durch Umsetzung mit Epichlorhydrin. Das eingesetzte Polypropylenoxid kann dabei ein mittleres Molgewicht im Bereich von 110 bis 3000 aufweisen; es kann hergestellt werden, indem die Polymerisation des Propylenoxids auf einem Alkylendiol mit C2-C18 in der dem Fachmann bekannten Weise gestartet wird.

Unter **Polyethylenpropylenoxiden** werden im Rahmen der Erfindung Verbindungen verstanden, die erhältlich sind, indem man die beiden terminalen OH-Gruppen von Polyethylenpropylenoxid in Oxirangruppen überführt, beispielsweise durch Umsetzung mit Epichlorhydrin. Das eingesetzte Polyethylenpropylenoxid kann dabei ein mittleres Molgewicht im Bereich von 80 bis 3000 aufweisen. Unter Polyethylenpropylenoxid werden Verbindungen verstanden, die durch Copolymerisation von Ethylen- und Propylenoxid erhältlich sind, wobei die Polymerisation der beiden Reaktanden gleichzeitig oder blockweise durchgeführt werden kann, indem die Polymerisation des Propylenoxids und/oder des Ethylenoxids auf einem Alkylendiol mit C2-C18 in der dem Fachmann bekannten Weise gestartet wird.

Die Verbindungen (A) können einzeln oder im Gemisch miteinander eingesetzt werden.

Zu den Verbindungen (B)

Unter **Bisphenol-A-Epoxiden** werden im Rahmen der Erfindung wie allgemein üblich Verbindungen verstanden, die erhältlich sind, indem man Bisphenol-A mit Epichlorhydrin umsetzt und/oder dieses durch Weitereaktion mit Bisphenol A polymerisiert . Diese Verbindungen sind daher auch unter der Bezeichnung Bisphenol-A-diglycidylether oder allgemein als Epoxidharze bekannt. Handelsübliche Produkte sind Epikote 828, 1001, 1002, 1003, 1004 u.a. der Firma Hexion (ehemals Shell).

Die Molelulargewichte der eingesetzten Bisphenol-A-epoxide liegen vorzugsweise im Bereich von 380 bis 3000

Unter **Bisphenol-F-Epoxiden** werden im Rahmen der Erfindung wie allgemein üblich Verbindungen verstanden, die erhältlich sind, indem man Bisphenol-F mit Epichlorhydrin umsetzt und/oder durch weitere Umsetzung mit Bisphenol-F polymerisiert. Diese Verbindungen sind daher auch unter der Bezeichnung Bisphenol-F-Diglycidylether oder allgemein als Bisphenol-F Epoxidharze bekannt.

Die Molelulargewichte der eingesetzten Bisphenol-F-epoxide liegen vorzugsweise im Bereich von 350 bis 3000.

Die Verbindungen (B) können einzeln oder im Gemisch miteinander eingesetzt werden.

Zu den Verbindungen (C)

**Bisphenol-A** ist dem Fachmann einschlägig bekannt und wird durch folgende Formel charakterisiert:

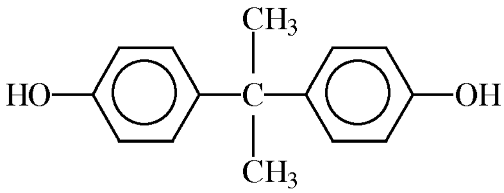

Bisphenol-A

**Bisphenol-F** ist dem Fachmann ebenfalls einschlägig bekannt.

Die Verbindungen (C) können einzeln oder im Gemisch miteinander eingesetzt werden.

Zu den Verbindungen (P)

Als **Polyamine (P)** kommen im Rahmen der vorliegenden Erfindung primäre und/oder sekundäre Amine mit mindestens zwei Stickstoffatomen und mindestens zwei aktiven Amino-Wasserstoffatomen pro Molekül zum Einsatz. Es können aliphatische, aromatische, aliphatisch-aromatische, cycloaliphatische und heterocyclische Di- und Polyamine benutzt werden. Beispiele für geeignete Polyamine (P) sind: Polyethylenamine (Ethylendiamin, Diethylentriamin, Triethylentetramin, Tetraethylenpentamin, usw.), 1,2-Propylendiamin, 1,3-Propylendiamin, 1,4-Butandiamin, 1,5-Pentandiamin, 1,3-Pentandiamin, 1,6-Hexandiamin, 3,3,5-Trimethyl-1,6-hexandiamin, 3,5,5-Trimethyl-1,6-hexandiamin, 2-Methyl-1,5-pentandiamin, Bis(3-aminopropyl)amin, N,N'-Bis(3-aminopropyl)-1,2-ethandiamin, N-(3-aminopropyl)-1,2-ethandiamin, 1,2-diaminocyclohexan, 1,3-Diaminocyclohexan, 1,4-Diaminocyclohexan, Aminoethylpiperazine, die Poly (alkylenoxid)diamine und Triamine (wie z.B. Jeffamine D-230, Jeffamine D-400, Jeffamine D-2000, Jeffamine D-4000, Jeffamine T-403, Jeffamine EDR-148, Jeffamine EDR-192, Jeffamine C-346, Jeffamine ED-600, Jeffamine ED-900, Jeffamine ED-2001), meta-Xylylendiamin, Phenylendiamin, 4,4'-Diaminodiphenylmethan, Toluoldiamin, Isophorondiamin, 3,3'-Dimethyl-4,4'-diaminodicyclohexylmethan, 4,4'-Diaminodicyclohexylmethan, 2,4'-Diaminodicyclo-hexylmethan, 1,3-Bis(aminomethyl)cyclohexan, die Mischung der über eine Methylenbrücke verknüpften Poly(cyclohexyl-aromischen)amine (auch als MBPCAA bekannt) und Polyaminoamide. Polyethylenamine, insbesondere Diethylentriamin sind besonders bevorzugt.

Die Verbindungen (P) können einzeln oder im Gemisch miteinander eingesetzt werden.

Zur Erstellung des Zwischenproduktes

In einer Ausführungsform setzt man bei der Herstellung des Zwischenproduktes die Verbindungen (A) und (B) in einem molaren Verhältnis von 0,1:1 bis 5:1 ein.

In einer Ausführungsform stellt man bei der Herstellung des Zwischenproduktes ein molares Verhältnis der Summe der Verbindungen (A) und (B) (diese Verbindungen enthalten jeweils zwei Oxirangruppen pro Molekül) zu Verbindung C (diese Verbindung enthält zwei OH-Gruppen pro Molekül) im Bereich von 1,1:1 bis 10:1 ein. Dies ist gleichbedeutend damit, dass man das Äquivalentverhältnis von Oxiranringen in der Summe der Verbindungen (A) und (B) zu reaktiven Wasserstoffatomen der Verbindung (C) auf einen Wert im Bereich von 1,1:1 bis 10:1 einstellt.

In einer weiteren Ausführungsform, nämlich in Fällen, wo im Zuge der Herstellung des Härters auch mindestens eine Verbindung (D) eingesetzt wird, stellt man bei der Herstellung des Zwischenproduktes ein molares Verhältnis der Summe der Verbindungen (A), (B) und (D) (diese Verbindungen enthalten jeweils zwei Oxirangruppen pro Molekül) zu Verbindung C (diese Verbindung enthält zwei OH-Gruppen pro Molekül) im Bereich von 1,1:1,0 bis 10,0:1,0 ein. Dies ist gleichbedeutend damit, dass man das Äquivalentverhältnis von Oxiranringen in der Summe der Verbindungen (A), (B) und (D) zu reaktiven Wasserstoffatomen der Verbindung (C) auf einen Wert im Bereich von 1,1:1,0 bis 10,0:1,0 einstellt.

Hierzu der Eindeutigkeit halber folgende Erläuterung: Der Ausdruck "Äquivalentverhältnis" ist dem Fachmann geläufig. Der grundlegende Gedanke hinter dem Begriff des Äquivalents ist der, dass man für jede an einer Reaktion beteiligten Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, dass unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, dass zwar OH-Gruppen oder NH-Gruppen solche reaktiven Gruppen darstellen, nicht aber $NH_2$-Gruppen, bei denen zwei reaktive H-Atome am selben Stickstoffatom sitzen. Hier werden sinnvollerweise innerhalb der funktionellen Gruppe $NH_2$ die beiden Wasserstoffatome als reaktive Gruppe betrachtet, so dass die funktionelle Gruppe $NH_2$ zwei reaktive Gruppen, nämlich die Wasserstoffatome, aufweist.

In einer Ausführungsform führt man die Herstellung des Zwischenproduktes in Gegenwart eines Katalysators durch, insbesondere Triphenylphosphin oder Ethyltriphenylphosphoniumiodid. Dabei beträgt die Menge des Katalysators etwa 0,01 bis 1,0 Gew.-% - bezogen auf die Gesamtmenge der Verbindungen (A), (B) und (C).

Die Epoxidzahl (%EpO) des Zwischenproduktes liegt vorzugsweise unterhalb von 10% EpO, insbesonder unterhalb von < 5% EpO. Die Definition der Epoxidzahl und die Einzelheiten der analytischen Bestimmung können dem Beispielteil dieser Anmeldung entnommen werden.

Zur Erstellung des Härters (H)

Zur Herstellung des Härters wird wie schon gesagt das Zwischenprodukt mit einem Polyamin (P) umgesetzt.

In einer Ausführungsform setzt man das Zwischenprodukt und das Polyamin (P) in solchen Mengen ein, dass das Äquivalentverhältnis der reaktiven H-Atome an den Aminostickstoffatomen von (P) zu den Oxirangruppen in der Zwischenverbindung im Bereich von 4:1 bis 100:1 liegt.

Die Umsetzung des Zwischenproduktes mit dem Polyamin wird vorzugsweise so durchgeführt, dass das Polyamin im Überschuss vorgelegt wird, so dass sichergestellt ist, dass im Wesentlichen 1 Molekül des Polyamins, vorzugsweise Diethylentriamin, mit jeweils einer der Epoxidgruppen der Zwischenverbindung reagiert. Überschüssiges Amin kann abdestilliert werden um den Gehalt an freiem Amin möglichst niedrig zu halten.

**Zur Phaseninversionspolymerisation (PIP)**

Unter Phaseninversionspolymerisation (PIP) ist folgendes zu verstehen: Man stellt zunächst eine wässrige Emulsion des Epoxidharzes (E) in Wasser her, wobei der amphiphile Epoxidharzhärter (H) als Emulgator fungiert. Dieses System - nachfolgend auch als Reaktionssystem bezeichnet - ist zunächst als Öl-in-Wasser-Emulsion (O/W-Emulsion) anzusprechen, das mit mindestens einem funktionalen nanostrukturierten anorganischen Material versetzt wird. Es ist dabei grundsätzlich möglich, zu jedem beliebigen Zeitpunkt das funktionale nanostrukturierte anorganische Material beizumischen, es ist jedoch bevorzugt, dieses nach dem Ausbilden des Reaktionssystems zuzufügen. Bei der ÖlKomponente dieser O/W-Emulsion handelt es sich selbstverständlich um das Epoxidharz.

Bei der Verwendung des Begriffs "im Sinne von" soll verstanden werden, dass dies "mit" oder "durch" das beschriebene Verfahren erfolgt.

Während der nun folgenden Umsetzung von Harz und Härter (Aushärtung im Sinne einer Polyaddition) kommt es zu einer Phaseninversion, d.h. das Reaktionssystem verändert sich von einer Emulsion des Typs O/W zu einer solchen des Typs W/O, in der Wasser als innere Phase von dem aushärtenden Polymer umschlossen wird, das gleichzeitig das mindestens eine funktionale nanostrukturierte anorganische Material in die Polymerstruktur einbettet. Dies liegt daran, dass sich im Zuge der Aushärtung die ursprünglichen Emulgatoreigenschaften des Härters verändern, da dessen Natur sich durch Polyaddition in Richtung zunehmender Hydrophobie wandelt.

Nach vollständiger Aushärtung liegt nun eine poröse Polymermatrix vor, die in den Kavitäten der organischen Matrix die Wasserphase enthält. Die Wasserphase lässt sich gewünschtenfalls durch Trocknung entfernen, wobei luftgefüllte Kavitäten entstehen.

Notwendige Bedingung dafür, dass eine Phaseninversionspolymerisation stattfindet ist, dass kein Wasser aus dem Reaktionssystem entweichen kann. Dies kann in verschiedener Weise technisch realisiert werden.

Zum einen kann das Reaktionssystem in eine abgeschlossene Form gegeben werden. Es ist auch möglich, das Reaktionssystem in ein offenes System zu geben und dann beispielsweise dafür zu sorgen, dass (a) an der Grenzfläche zur Gasphase (meist umgebende Luft) eine ausreichende Luftfeuchtigkeit herrscht, die eine Austrocknung bzw. einen Wasserverlust der oberen Schicht des Reaktionssystems verhindert oder dass (b) die Grenzfläche zur Gasphase abgedeckt wird, beispielsweise durch eine Folie.

Während es sich bei den bisher beschriebenen Varianten der Durchführung der PIP sozusagen um verlustfreie Ausführungsformen handelt, besteht eine weitere Variante der PIP-Durchführung darin, das Reaktionssystem zwar in

ein offenes System zu geben, jedoch keine besonderen Vorkehrungen zu treffen, um einen Wasserverlust der Grenzschicht zur Gasphase zu verhindern. In diesem Falle bildet sich in dieser Grenzschicht durch Wasserverlust eine dichte, chemikalienresistente Struktur (die als Klarlack angesprochen werden kann), die eine Wasser-Barriere für den darunter befindlichen Teil des Reaktionssystems bildet, so dass in dieser ungehindert die PIP stattfinden kann. Nach vollständiger Härtung des Reaktionssystems kann man dann die dichte, chemikalienresistente Schicht (die in der Regel 0,1 bis 0,3 mm dick ist), durch mechanisches Abtragen beseitigen.

Dass es sich bei den ausgehärteten Systemen um nanoporöse Strukturen handelt ist bereits optisch daran zu erkennen, dass die erhaltenen Materialien nicht klar sind, sondern weiß.

In einer bevorzugten Ausführungsform wird die PIP so durchgeführt, dass Epoxidharz (E) und Härter (H) in einem Äquivalentverhältnis von 2 : 1 bis 1 : 2 eingesetzt werden. Dabei sind E zu H Äquivalentverhältnisse von 1 : 1 besonders bevorzugt, wobei der Zusatz des mindestens einen funktionalen nanostrukturierten anorganischen Materials im Bereich von 80 Vol-% bis 2 Vol-% geeignet ist. Die Granulometrie der funktionalen anorganischen Materialien ist frei wählbar, allerdings sollte für hohe Füllgrade ein Material bevorzugterweise sphärischen Charakters gewählt werden, um die Raumausfüllung der Struktur zu gewährleisten.

Die PIP ist gekennzeichnet durch eine einleitende Phase, bei der eine O/W-Emulsion vorliegt und eine Aushärtephase, deren beginn mit der Bildung der W/O-Emulsion anzusetzen ist. Die PIP kann bei 0 bis 100% Luftfeuchte durchgeführt werden. Der Wassergehalt des PIP-Reaktionssystems kann im Bereich von 95 bis 20 Gew.-% (bezogen auf das gesamte Reaktionssystem) variiert werden.

Gemäß der vorliegenden Erfindung können ein oder mehrere der oben genannten Epoxidharzsysteme eingesetzt werden, um einen organischen nanoporösen polymeren Kunststoff herzustellen. Ebenso können ein oder mehrere der oben genannten funktionalen nanostrukturierten anorganischen Materialien verwendet werden, d.h. auch Mischungen dieser Materialien. Schließlich können mehrere der organischen nanoporösen polymeren Kunststoffe und mehrere der funktionalen nanostrukturierten anorganischen Materialien miteinander kombiniert werden.

Gewünschtenfalls können dem Reaktionssystem auch weitere Rheologieadditive wie Verdicker und/oder Netz-/Dispergiermittel zugesetzt werden.

Die Aushärtung des Reaktionssytems kann in einem breiten Temperaturbereich durchgeführt werden, vorzugsweise zwischen 1 °C und 99 °C und insbesondere zwischen 5 °C und 60 °C.

Im Gegensatz zu den üblichen Verfahren zur Herstellung von Polymerschäumen können den PIP-Reaktionssystemen auch Füllstoffe zugesetzt werden. Durch den Einsatz ausgewählter Füllstoffe lassen sich dabei sowohl die mechanischen Eigenschaften wie Druckfestigkeit, Biegefestigkeit, E-Modul, Dichte als auch die Wärmeleitfähigkeit der erfindungsgemäßen nanoporösen polymeren Kunststoffe weiter modifizieren. Hierzu eignet sich insbesondere der Einsatz von Fasern oder faserartigen Materialien.

Die Wärmeleitfähigkeit der erfindungsgemäßen Kombinationsdämmstoffe liegt vorzugsweise unterhalb von 0,09 W/(m*K), weiter bevorzugt unterhalb von 0,05 W/(m*K), weiter bevorzugt unterhalb von 0,04 W/(m*K), weiter bevorzugt unterhalb von 0,03 W/(m*K). Die Wärmeleitfähigkeit kann nach ISO 8301 gemessen werden, wie unten beschrieben.

Darüber hinaus weisen die erfindungsgemäßen Kombinationsdämmstoffe eine hohe mechanische Festigkeit auf. Auf die mechanische Festigkeit kann aus der maximalen Druckspannung geschlossen werden. Dabei liegt die maximale Druckspannung vorzugsweise oberhalb von 1,0 MPa. Die Messung der Druckfestigkeiten kann analog zu DIN 53452 bzw. 53454 durchgeführt werden, wie unten beschrieben.

Die in Vol.-% angegebenen Mengen beziehen sich jeweils auf die Volumina der Stoffe, gemessen bei Raumtemperatur, d.h. bei 20 °C.

Des Weiteren ist es im Sinne dieser Erfindung, die erfindungsgemäßen Wärmedämm-Materialien zusätzlich mit Brandschutzadditiven, Hydrophobierungsmitteln, Bioziden oder Pigmenten, wie sie im Stand der Technik bekannt sind, ausrüsten zu können.

Die erfindungsgemäßen Kombinationsdämmstoffe können bevorzugt als Bauelement ausgebildet sein. Dabei kann das Bauelement weiter bevorzugt als Formkörper oder als Dämmplatte ausgebildet sein. Der Kombinationsdämmstoff sowie die Bauelemente können bevorzugt zur Wärmedämmung in Gebäuden und Gebäudeteilen Verwendung finden.

Im Folgenden soll die Erfindung anhand von Beispielen näher erläutert werden, ohne jedoch auf die speziellen Ausgestaltungen der Beispiele beschränkt zu sein.

**Beispiele**

**<u>Abkürzungen</u>**

Im Folgenden bedeuten:

- EEW = Epoxidäquivalentgewicht (wie oben beschrieben).
- MW = mittleres Molekulargewicht
- UPM = Umdrehungen pro Minute
- % = Gewichtsprozent, sofern nicht explizit anders angegeben

**Verwendete Rohstoffe**

**Epoxidharz (E):** Chem Res E20 (Cognis GmbH)

**Funktionales nanostrukturiertes anorganisches Material (G):** Aerogel, Fa. Cabot **Härter (H):** Es wurden folgende Härter H1 bis H5 hergestellt:

**Härter H1**

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 3,5 Stunden gerührt, bis die Epoxidzahl 3,95% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.

Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 89,5g Wasser versetzt.

Es wurden 205,6g einer klaren bernsteinfarbigen Flüssigkeit erhalten mit einer Viskosität (in Substanz, Brookfield, 10Upm, 40°C) von 2140 mPas, einem Feststoffgehalt von 60% und einer Aminzahl von 134.

**Härter H2**

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 9 Stunden gerührt, bis die Epoxidzahl 3,81% betrug. Anschließend wurde auf 60°C abgekühlt und bei dieser Temperatur 121,4g

Diethylentriamin hinzugefügt. Nach Abklingen der Exothermie wurde die Reaktionsmischung erneut für 2 Stunden auf 160°C erhitzt.

Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 89,5g Wasser versetzt.

Es wurden 202,3g einer klaren bernsteinfarbigen Flüssigkeit erhalten mit einer Viskosität (in Substanz, Brookfield, 10Upm, 40°C) von 2110 mPas und einem Feststoffgehalt von 60%.

**Härter H3**

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 5 Stunden gerührt, bis die Epoxidzahl 4,12% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.

Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 90,5g Wasser versetzt.

Es wurden 209,2g einer klaren braungelben Flüssigkeit erhalten mit einer Viskosität (in Substanz, Brookfield, 10Upm, 40°C) von 1440 mPas und einem Feststoffgehalt von 60%.

**Härter H4**

34,4g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A, 8,9g Butandioldiglycidylether (EEW: 132) und 0,1g Triphenylphosphin gemischt. Die so erhaltene Mischung wurde auf 160°C erhitzt und bei dieser

Temperatur über 2 Stunden gerührt bis ein Epoxidwert von 4,39 % erhalten wurde. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.

Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 91,7g Wasser versetzt.

Es wurden 211,9g einer klaren, hellgelben Flüssigkeit erhalten mit einer Viskosität (in Substanz, Brookfield, 10Upm, 40°C)von 2500 mPas und einem Feststoffgehalt von 60%.

## Härter H5

34,4g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A, 10,7g Hexandioldiglycidylether (EEW: 159,1) und 0,1g Triphenylphosphin gemischt. Die so erhaltene Mischung wurde auf 160°C erhitzt und bei dieser Temperatur über 2 Stunden gerührt bis eine Epoxidzahl von 4,37 % erhalten wurde. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.

Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 93,0g Wasser versetzt.

Es wurden 215,1g einer klaren, hellgelben Flüssigkeit erhalten mit einer Viskosität (in Substanz, Brookfield, 10Upm, 40°C) von 2080 mPas und einem Feststoffgehalt von 60%.

## Anwendungsbeispiele 1 bis 5

Epoxidharze (E) und Härter (H) wurden in einem Rührbecher (Durchmesser 95mm, Höhe 120mm) vorgelegt und mit einem Pendraulikrührer Typ LM34 bei Stufe 1 (ca. 465 Umdrehungen/Minute) voremulgiert. Die eingesetzten Mengen an (E) und (H) sind Tabelle 1 zu entnehmen. Eine homogene Weißfärbung zeigte eine entsprechende Homogenisierung an. Anschließend erfolgte portionsweise die Wasserzugabe (die jeweilige Wassermenge ist Tabelle 1 zu entnehmen). Die Rührgeschwindigkeit wurde so angepasst, dass sich gerade kein Thrombus mehr bildete. Nach 5 min Homogenisierung wurde das funktionale nanostrukturierte anorganische Material vorsichtig mit einem Spatel in die vorbereitete Emulsion eingerührt. Die Gesamtzeit vom Voremulgieren bis zur Verarbeitung betrug ca. 7 Minuten. Alle Versuche wurden mit einem Äquivalentverhältnis Epoxidharz zu Härter von 1 : 1 durchgeführt.

Einzelheiten zu den Beispielen 1 bis 5 können der Tabelle 1 entnommen werden, die auch die Messdaten bezüglich Wärmeleitfähigkeit und Druckfestigkeiten sowie der erhaltenen nanoporösen polymeren Kunststoffe enthält.

### Probenvorbereitung

Zur Herstellung der Prüfkörper für Druckfestigkeitsmessungen wurden entsprechende Silikonformen, beschichtet mit dem Trennmittel T3 (Firma Ebalta), verwendet. Die Platten für die Wärmeleitfähigkeitsmessung wurden in einer Teflonform, beschichtet mit dem Trennmittel Loxiol G40 (Fa. Cognis), hergestellt. Die Gussmassen wurden bis zur Entformung abgedeckt, jedoch nicht Luftdicht verschlossen. Die Prüfkörper wurden nach 18h entformt, die Trocknung benötigte bei 23°C ca. 7 Tage und bei 55°C ca. 48h.

### Wärmeleitfähigkeitsmessung

Die Wärmeleitfähigkeit wurde nach ISO 8301 gemessen, dies entspricht der Wärmefluss-Messmethode. Die Plattenmaße betrugen 150mm x 150mm, die Schichtdicke variierte zwischen 20mm und 25mm. Zur Messung wurde eine Messapparatur der Firma NETZSCH Typ HFM 436/3/1E verwendet, der Anpressdruck lag bei 65N. Als Messtemperatur wurde 10°C mit einer Temperaturdifferenz von 20K gewählt. Dies ist eine Standardmessung für Wärmedämmstoffe. Die Platten wurden 7 Tage bei Raumtemperatur getrocknet und anschließend bei 55°C bis zur Massenkonstanz nachgetrocknet. Die Proben wurden vor der Messung mindestens 72h bei Raumtemperatur gelagert, eine spezielle Lagerung bei Normklima fand nicht statt.

### Bestimmung von Druckfestigkeiten

Die Messung der Druckfestigkeiten wurde in Anlehnung an DIN 53452 bzw. 53454 durchgeführt. Eine Lagerung bei Normklima fand nicht statt. Die Geometrieänderung der Probenkörper konnte nicht genau vorhergesagt werden und

wurde deshalb nicht berücksichtigt. Als Messinstrument wurde eine Universalprüfmaschine von Instron, Typ 5565 mit der Software Bluehill 2.0, eingesetzt. Die Maße der Prüfkörper für die Druckversuche wurden zylindrische Prüfkörper der Maße 27mm Höhe und 12mm Durchmesser eingesetzt. Die Prüfgeschwindigkeiten sind den DIN zu entnehmen. Trocknungstemperaturen waren 23°C und 55°C.

**Tabelle 1**

| | Beispiel 11 | Beispiel 2 | Beispiel 3 | Beispiel 4 | Beispiel 5 |
|---|---|---|---|---|---|
| **Härter H1 [g]** | 160,0 | 160,0 | 160,0 | 160,0 | 270,0 |
| **Epoxidharz Chem Res E20 [g]** | 145,1 | 145,1 | 145,1 | 145,1 | 244,8 |
| **Vollentsalztes Wasser [g]** | 297,6 | 297,6 | 297,6 | 297,6 | 163,2 |
| **Bindemittelgehalt der organisch-wässrigen Phase [%]** | 40 | 40 | 40 | 40 | 60 |
| **Aerogel G [g]** | ohne | 60 | 20 | 90 | ohne |
| **Füllstoffgehalt [Vol-%]** | | 54 | 28 | 64 | |
| **Trocknungstemperatur** | 23°C | 23°C | 23°C | 23°C | 23°C |
| **Dichte [g/cm$^3$]** | 0,47 | 0,27 | 0,37 | 0,23 | 0,58 |
| **Wärmeleitfähigkeit [W/(m*K)]** | 0,052 | 0,034 | 0,044 | 0,030 | 0,083 |
| **Max. Druckspannung Mittelwert [MPa]** | 9,0 | 9,5 | 9,2 | 9,8 | 10,6 |

Hinweis: Die Zeile "Bindemittelgehalt" dient lediglich der Information. Unter Bindemittel ist hier einfach das Umsetzungsprodukt von Härter H1 und Epoxidharz (Chem Res E20) zu verstehen. Der Bindemittelgehalt ist dementsprechend der prozentuelle Anteil des so definierten Bindemittels am Gesamtsystem. Exemplarisch sei die Berechnung des Bindemittelgehalts für Beispiel 1 demonstriert: Da die Reaktion von Epoxidharz mit Aminhärter (Härter H1) als Polyaddition ohne Abspaltung von Molekülteilen erfolgt, sind die Massenanteile von Harz und Härter zu addieren, um die Menge des resultierenden Bindemittels zu erhalten: Das eingesetzte Epoxidharz Chemres E 20 ist zu 100% zu berücksichtigen (145,1g). Vom eingesetzten Härter H1 sind, da er einen Feststoffgehalt von 60% aufweist, lediglich 0,6 x 160,0g = 96,0g zu berücksichtigen. Daraus ergibt sich die Menge des Bindemittels im System zu 96,0g + 145,1g = 241,1g. Das Gesamtsystem enthält zusätzlich 297,6 g Wasser, umfasst mithin eine Gesamtmenge von 160g+145,1g+297,6g = 602,7g. Der Bindemittelanteil im Gesamtsystem ergibt sich daraus wie folgt:

$$\%\ \text{Bindemittel} = 241{,}1 \text{ x } 100 / 602{,}7 = 40{,}00\%.$$

## Patentansprüche

1. Kombinationsdämmstoff umfassend einen organischen nanoporösen polymeren Kunststoff, wobei der Kunststoff erhältlich ist durch Umsetzung von mindestens einem Epoxidharz mit mindestens einem amphiphilen Epoxidharzhärter in Wasser im Sinne einer Phaseninversionspolymerisation, **dadurch gekennzeichnet, dass** der Kombinationsdämmstoff mindestens ein funktionales nanostrukturiertes anorganisches Material enthält.

2. Kombinationsdämmstoff nach Anspruch 1, wobei man solche Epoxidharzhärter einsetzt, die erhältlich sind, indem man eine Mischung enthaltend

   (A) mindestens ein epoxidiertes Polyalkylenoxid, ausgewählt aus der Gruppe der epoxidierten Polyethylenoxide, der epoxidierten Polypropylenoxide und der Polyethylenpropylenoxide,
   (B) mindestens eine epoxidierte aromatische Hydroxyverbindung ausgewählt aus der Gruppe der Bisphenol-A-Epoxide und der Bisphenol-F-Epoxide und
   (C) mindestens eine aromatische Hydroxyverbindung, ausgewählt aus der Gruppe Bisphenol-A und Bisphenol-F

   zu einem Zwischenprodukt umsetzt und dieses Zwischenprodukt anschließend mit einem Polyamin (P) umsetzt zu

dem Kunststoff.

3. Kombinationsdämmstoff nach einem oder mehreren der vorgehenden Ansprüche, wobei man als Polyamin (P) Diethylentriamin einsetzt.

4. Kombinationsdämmstoff nach einem oder mehreren der vorgehenden Ansprüche, wobei man als Verbindungen A epoxidierte Polypropylenoxide einsetzt.

5. Kombinationsdämmstoff nach einem oder mehreren der vorgehenden Ansprüche, wobei man als Verbindungen B Bisphenol-A-Epoxide einsetzt.

6. Kombinationsdämmstoff nach einem oder mehreren der vorgehenden Ansprüche, wobei man als Verbindung C Bisphenol-A einsetzt.

7. Kombinationsdämmstoff nach einem oder mehreren der vorgehenden Ansprüche, wobei als funktionale nanostrukturierte anorganische Materialien Aerogele, Xerogele, Zeolithe oder pyrogene Kieselsäuren verwendet werden.

8. Kombinationsdämmstoff nach einem oder mehreren der vorgehenden Ansprüche, wobei als funktionale nanostrukturierte anorganische Materialien hochporöse Feststoffe mit einer netzartigen Hohlraumstruktur verwendet werden.

9. Kombinationsdämmstoff nach einem oder mehreren der vorgehenden Ansprüche, wobei die funktionalen nanostrukturierten anorganischen Materialien wärmeisolierende Eigenschaften aufweisen.

10. Kombinationsdämmstoff nach einem oder mehreren der vorhergehenden Ansprüche, wobei die funktionalen nanostrukturierten anorganischen Materialien in einer Menge von 80 Vol-% bis 2 Vol-% enthalten sind.

11. Kombinationsdämmstoff nach einem oder mehreren der vorhergehenden Ansprüche, wobei die funktionalen nanostrukturierten anorganischen Materialien im organischen nanoporösen polymeren Kunststoff geordnet, ungeordnet oder in einer Schichtstruktur eingebettet sein können.

12. Bauelement, das mindestens einen Kombinationsdämmstoff nach mindestens einem der Ansprüche 1 bis 11 enthält.

13. Bauelement nach Anspruch 12, wobei dieses als Formkörper oder als Dämmplatte ausgebildet sein kann.

14. Wärmedämmverbundsystem umfassend wenigstens den Kombinationsdämmstoff nach einem der Ansprüche 1 bis 11 und/oder ein Bauelement nach einem der Ansprüche 12 oder 13.

15. Verwendung des Kombinationsdämmstoffs nach einem der Ansprüche 1 bis 11, eines Bauelements nach einem der Ansprüche 12 oder 13 und/oder des Wärmedämmverbundsystems nach Anspruch 14 zur Wärmedämmung an Gebäuden und Gebäudeteilen.

Europäisches Patentamt
European Patent Office
Office européen des brevets

# EUROPÄISCHER RECHERCHENBERICHT

Nummer der Anmeldung
EP 10 16 3180

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CA 2 685 637 A1 (COGNIS IP MAN GMBH [DE]) 15. Mai 2010 (2010-05-15)<br>* Seite 2, Zeilen 23-28; Beispiele *<br>----- | 1-15 | INV.<br>C08J9/00<br>C08J9/28 |
| A | US 2008/287561 A1 (MENASHI JAMEEL [US] ET AL) 20. November 2008 (2008-11-20)<br>* Seite 3, Absatz 30-34; Ansprüche; Beispiele *<br>----- | 1-15 | |
| | | | RECHERCHIERTE SACHGEBIETE (IPC) |
| | | | C08J |

Der vorliegende Recherchenbericht wurde für alle Patentansprüche erstellt

1

| Recherchenort | Abschlußdatum der Recherche | Prüfer |
|---|---|---|
| München | 7. September 2010 | Masson, Patrick |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 10 16 3180

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-09-2010

| Im Recherchenbericht angeführtes Patentdokument | Datum der Veröffentlichung | Mitglied(er) der Patentfamilie | Datum der Veröffentlichung |
|---|---|---|---|
| CA 2685637 A1 | 15-05-2010 | EP 2186842 A1 | 19-05-2010 |
| | | US 2010127204 A1 | 27-05-2010 |
| US 2008287561 A1 | 20-11-2008 | EP 1966289 A2 | 10-09-2008 |
| | | JP 2009512764 T | 26-03-2009 |
| | | KR 20080072856 A | 07-08-2008 |
| | | WO 2007047970 A2 | 26-04-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1518875 A